Europäisches Patentamt

(19) European Patent Office

Office européen des brevets

(11) Publication number: 0 134 641
A2

(12) # EUROPEAN PATENT APPLICATION

(21) Application number: 84304449.6

(22) Date of filing: 29.06.84

(51) Int. Cl.⁴: G 05 D 23/19
F 25 B 49/00

(30) Priority: 06.08.83 GB 8321283

(43) Date of publication of application:
20.03.85 Bulletin 85/12

(84) Designated Contracting States:
AT BE CH DE FR GB IT LI LU NL SE

(71) Applicant: THORN EMI Domestic Appliances Limited
THORN EMI House Upper Saint Martin's Lane
London, WC2H 9ED(GB)

(72) Inventor: Mills, Alan Charles
89, St. Thomas Avenue Hayling Island
Hampshire, PO11 0EU(GB)

(72) Inventor: Shone, Kenneth Arthur
97, St. Thomas Avenue Hayling Island
Hampshire, PO11 0EU(GB)

(74) Representative: Marsh, Robin Geoffrey et al,
Thorn EMI Patents Limited The Quadrangle Westmount
Centre Uxbridge Road
Hayes Middlesex, UB4 0HB(GB)

(54) A refrigerating control system.

(57) An electrical appliance includes a refrigerator compartment (2) and a freezer compartment (3) and is provided with a control system including a single compressor (4), a condensor (6), and first (12) and second (10) evaporators associated respectively with the refrigerator (2) and freezer (3) compartments. Both compartments (2, 3) have respective thermostats, the freezer thermostat being capable of de-energising the compressor (4) when the set temperature in the freezer compartment (3) is attained. The temperature in the refrigerator compartment (2) is controlled by a heater (13), which induces a phase change in refrigerant material circulating through the evaporator (12). A thermal cut-out is provided to de-energise the heater (13) if a predetermined maximum temperature is sensed in the vicinity of the heater (13).

FIG.1

EP 0 134 641 A2

: 1 :

## A REFRIGERATING CONTROL SYSTEM

This invention relates to a refrigerating control system for a domestic electrical appliance of the kind known as "fridge/freezers", i.e. to such appliances as contain respective refrigerating and freezing compartments.

It is evident that the two compartments will have differing requirements for refrigeration and that these requirements will vary from time to time in accordance with their respective contents, climatic conditions, etc. and thus it will be appreciated that a control system, suitable for use with such appliances needs to be flexible in coping with the different and respectively varying requirements of the two compartments.

A known refrigerating control system proposed for use with such appliances incorporates two compressors and two refrigerant systems, one for each compartment. This system is effective but suffers from the problem of being expensive to manufacture. An alternative proposal utilises a single compressor and, in effect, a single refrigerant system coupled in series between the two compartments. This system is, of course, cheaper to produce but tends to exhibit poor control in low ambient temperatures.

It is an object of this invention to provide a control system for a "fridge/freezer" appliance, which system does not exhibit the drawbacks of the prior proposals described above.

According to the present invention, there is provided a refrigerating control system for an electrical appliance having a refrigerating compartment for storage of fresh foods and a freezing compartment for storage of frozen foods, characterised in that said system includes a compressor, a condensor, and first and second evaporators, through which in use refrigerant material is circulated, associated respectively with said refrigerating and freezing compartments, at least said refrigerating compartment being provided with a user-operable thermostatic control, said system further including a heater for inducing a phase change in said refrigerant material to control the temperature within the refrigerating compartment, in accordance with the setting of said thermostatic control, and a thermal cut-out device arranged to be sensitive to a predetermined maximum temperature in the vicinity of said heater and to de-energise said heater when said maximum temperature is sensed.

In order that the invention may be clearly understood and readily carried into effect, one embodiment thereof will now be described, by way of example only, with reference to the accompanying drawings of which:-

Figure 1 shows, in schematic form, the refrigerant circuit layout of a system in accordance with one example of the invention, and

Figure 2 shows, again in schematic form, the associated electrical control circuit.

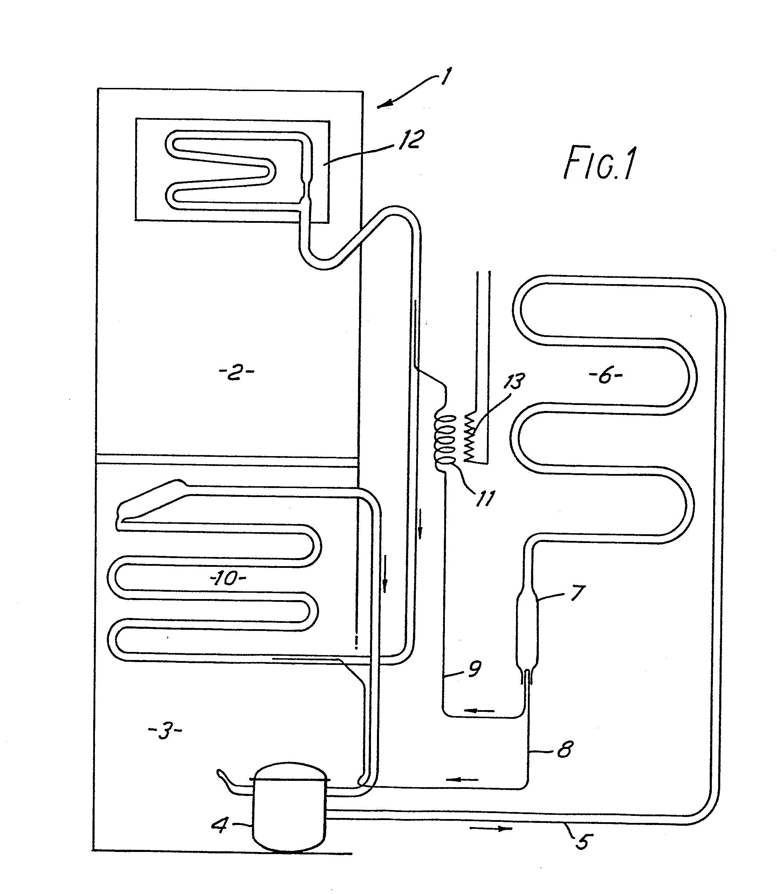

Referring to Figure 1, the appliance is shown generally at 1 and includes a refrigerator compartment 2 and a freezer compartment 3. A single compressor 4 drives a suitable coolant medium of known kind via a pipe 5 to a condenser 6 and a drier 7, at the output of which the medium separates into two restrictor tubes, 8 and 9. Restrictor tube 8 leads to the evaporator 10 associated with the freezer compartment 3 and thence back to the input of compressor 4. Restrictor tube 9 leads to the evaporator 12 associated with the refrigerator compartment 2. The medium, having traversed the evaporator 12, is constrained to pass through the evaporator 10 before returning to the compressor 4.

Portion 11 of the restrictor tube 9 is wound around a control heater 13 for reasons that will become clear hereinafter.

Both compartments 2 and 3 have respective thermostats (not shown in Figure 1) to permit the temperatures of the two compartments to be selected by the user. The freezer thermostat is, however, caused to be the main control and this generates an electrical signal which starts the compressor 4 when refrigeration is required in the freezer compartment 3. The refrigerator compartment 2 will also be cooled until the refrigerator thermostat (which is of the changeover kind) produces an electrical signal indicating that the relevant compartment (2) is cold enough. At this time, the control heater 13 is energised and induces a phase change in the refrigerant material flowing through the portion 11 of the restrictor tube 9, changing the material from liquid to vapour. The mass flow rate is reduced dramatically when this phase change occurs, effectively eliminating cooling of the refrigerator compartment 2. The heater continues to be energised until the refrigerator thermostat generates a signal indicating that further cooling of the relevant compartment (2) is required. At that time the heater 13 is de-energised and cooling re-commences.

Should the temperature in the freezer compartment 3 reach a point at which its thermostat would turn the compressor 4 off, the arrangement is such that the refrigerator thermostat can re-start the compressor should the refrigerator compartment temperature exceed that set by the thermostat associated with the relevant compartment (2). Under these circumstances, it will be appreciated that the freezer compartment 3 will be cooled to an extent slightly greater than that set by its thermostat.

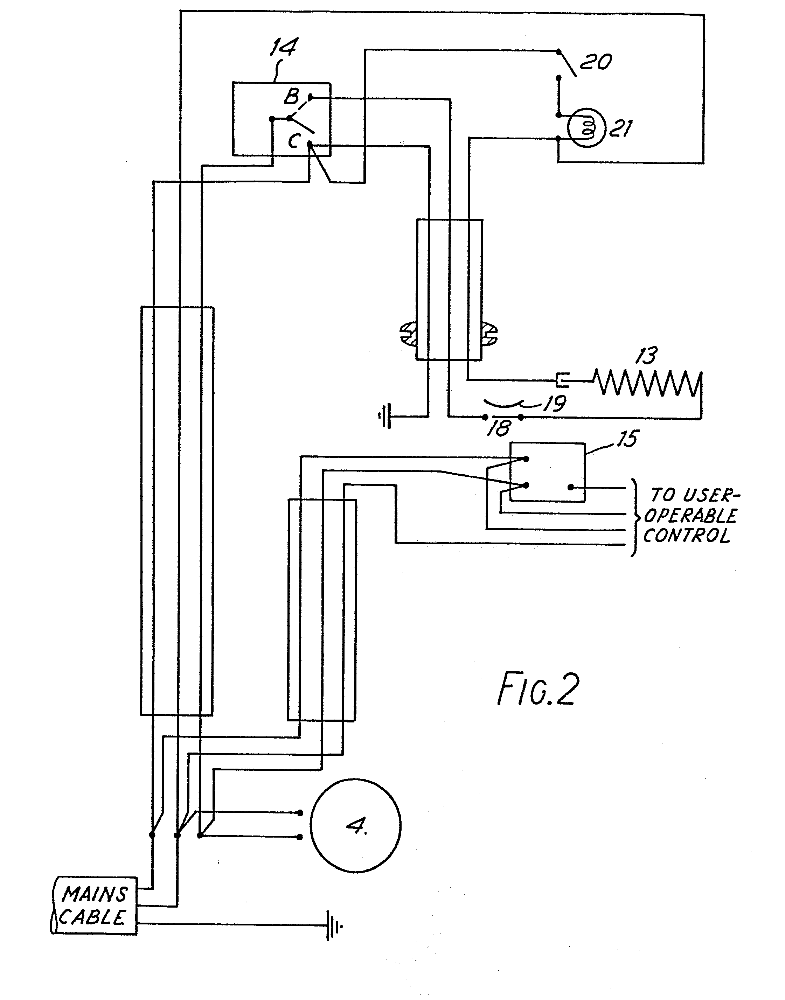

Referring now to Figure 2, the thermostats associated with the refrigerator compartment 2 and the freezer compartment 3 are shown at 14 and 15 respectively. Thermostat 15, the main device, is effective to start the compressor 4 when the temperature in the freezer compartment exceeds that set on the thermostat 15 by means of a user-operable control. The compressor having been activated, both compartments 2 and 3 are cooled, and let us assume that compartment 2 is the first to be cooled to the temperature set by its associated thermostat 14. At this time, the thermostat 14 changes from position C to position B, which thus energises the heater 13 via a normally closed switch 18 which is opened when a temperature detector 19, of any convenient form, detects that the temperature in the vicinity of the heater 13 is, or is in danger of, exceeding a safe limit set by the detector itself. The detector 19 is typically a bimetallic thermal cut-out device and the switch 18 may be integral therewith or separate and controlled thereby.

When the temperature within the refrigerator compartment 2 has risen to above the temperature set by the thermostat 14, then the thermostat 14 reverts to position C, thereby de-energising the heater 13 and also ensuring that the compressor 4 is turned on, even if the freezer thermostat 15 has caused the compressor 4 to be turned off due to the freezer compartment 3 having reached the set temperature therefor.

Switch 20 may be arranged to energise a neon light 21 situated within the refrigerator compartment 2, whenever the door thereto is opened.

: 5 :                    0134641

CLAIMS

1.   A refrigerating control system for an electrical appliance having a refrigerating compartment (2) for storage of fresh foods and a freezing compartment (3) for storage of frozen foods, characterised in that said system includes a compressor (4), a condensor (6), and first (12) and second (10) evaporators, through which in use refrigerant material is circulated, associated respectively with said refrigerating (2) and freezing (3) compartments, at least said refrigerating compartment (2) being provided with a user-operable thermostatic control (14), said system further including a heater (13) for inducing a phase change in said refrigerant material to control the temperature within the refrigerating compartment (2), in accordance with the setting of said thermostatic control (14), and a thermal cut-out device (19) arranged to be sensitive to a predetermined maximum temperature in the vicinity of said heater (13) and to de-energise said heater (13) when said maximum temperature is sensed.

2.   A system as claimed in claim 1 wherein said freezing compartment (3) is also provided with a thermostatic control (15), said control (15) being arranged to de-activate said compressor (4) when the temperature set by said control (15) is attained.

3.   A system as claimed in claim 2 wherein said thermostatic control (14) associated with said refrigerating compartment (2) is capable of re-activating said compressor (4), following de-activation thereof by said control (15) associated with said freezing compartment (3), if the temperature within said refrigerating compartment (2) falls below the set temperature.

4.   A system as claimed in any one of claims 1 to 3 wherein said first (12) and second (10) evaporators are connected in series, so that refrigerant material circulated therethrough is constrained to circulate through said second evaporator (10) associated with said freezing compartment (3) following circulation thereof through said first evaporator (12) associated with said refrigerating compartment (2).

FIG.1

FIG.2